# EUROPÄISCHE PATENTSCHRIFT

(11) **EP 2 222 990 B1**
(45) Veröffentlichungstag und Bekanntmachung des Hinweises auf die Patenterteilung: **12.10.2011**
(21) Anmeldenummer: 08864504.9
(22) Anmeldetag: 19.12.2008
(51) Int. Cl.: F16K 15/02

(54) **VENTILBAUGRUPPE MIT GEWÖLBTER DICHTFLÄCHE**
VALVE ASSEMBLY HAVING AN ARCHED SEALING SURFACE
ENSEMBLE SOUPAPE À SURFACE D'ÉTANCHÉITÉ INCURVÉE

(30) Priorität: 20.12.2007 DE 202007017803 U
(43) Veröffentlichungstag der Anmeldung: 01.09.2010
(73) Patentinhaber: Hengst GmbH & Co. KG, 48147 Münster (DE)
(72) Erfinder: ARDES, Wilhelm, 59387 Ascheberg (DE)
(74) Vertreter: Habbel, Ludwig
(86) Internationale Anmeldenummer: PCT/DE2008/002109
(87) Internationale Veröffentlichungsnummer: WO 2009/080000

(56) Entgegenhaltungen:
- US-A1- 2001 001 964
- US-A1- 2006 196 555
- US-A1- 2007 075 284
- US-A1- 2007 137 711
- US-A1- 2007 277 884

## Beschreibung

Die Erfindung betrifft eine Ventilbaugruppe, bei welcher das Ventil im Kreuzungsbereich zweier sich durchdringender Hohlräume vorgesehen ist. Der bewegliche Ventilkörper des Ventils liegt daher einer Dichtfläche an, die aufgrund der Durchdringung der beiden Hohlräume gewölbt verläuft, also nicht nur als beispielsweise kreisrunde Dichtfläche in einer einzigen Ebene gebogen verläuft, wie z.B. in der US 2007/0277884, sondern dreidimensional gebogen ist.

Die Ausgestaltung eines entsprechenden Ventilkörpers mit an den gewölbten Verlauf der Dichtfläche angepasster Formgebung ist insofern nachteilig, als Winkelfehler bei der Positionierung des Ventilkörpers dazu führen können, dass der Ventilkörper der Dichtfläche nicht optimal, insbesondere nicht fluiddicht abdichtend, anliegt. Um eine plane Dichtfläche zu schaffen, ist es daher grundsätzlich denkbar, das Gehäuse in dem Bereich, in dem die Dichtfläche vorgesehen ist, spanabhebend nachzubearbeiten. Dies ist allerdings mit Bearbeitungskosten versehen und bei bestimmten Werkstoffen ohnehin unzulässig, beispielsweise bei Kunststoffen, die mit anderen Materialien gefüllt sind bzw. insbesondere mit faserförmigen Verstärkungsstoffen versehen sind: Bei derartigen Werkstoffen würde die spanabhebende Bearbeitung die Füllstoffe bzw. insbesondere die faserförmigen Verstärkungsstoffe durchtrennen und Grenzflächen zwischen diesen Füllstoffen bzw. Verstärkungsstoffen einerseits und dem Kunststoffmaterial andererseits frei legen, was unzulässig ist.

In der Praxis wird daher stets das Ventil in einen Bereich verlagert, wo die Ausgestaltung einer planen Dichtfläche möglich ist.

Der Erfindung liegt die Aufgabe zugrunde, eine Ventilbaugruppe mit einer gewölbten Dichtfläche zu schaffen, die möglichst preisgünstig herstellbar ist, die Ausgestaltung eines Gehäuses mit möglichst kleinen baulichen Abmessungen ermöglicht, und die einen zuverlässigen Dichtsitz des Ventils in dessen Schließstellung ermöglicht.

Diese Aufgabe wird durch eine Ventilbaugruppe mit den Merkmalen des Anspruchs 1 gelöst.

Die Erfindung schlägt mit anderen Worten vor, eine Zwischenhülse vorzusehen, die einerseits einem der beiden Hohlräume fluiddicht anliegt, und die andererseits eine plane Dichtfläche schafft, welcher der bewegliche Ventilkörper der Ventilbaugruppe anliegt.

Überraschend hat sich herausgestellt, dass trotz der Anordnung dieses zusätzlichen Bauteils, nämlich der Zwischenhülse, die Herstellung der gesamten Ventilbaugruppe insgesamt vereinfacht wird und besonders wirtschaftlich möglich ist: Einerseits wird ein kostenträchtiger Bearbeitungsschritt in Form einer spanabhebenden Bearbeitung, beispielsweise bei metallischen Gehäusen, erübrigt. Weiterhin wird durch den festen Einbau der Zwischenhülse sichergestellt, dass eine Abdichtung gegenüber einem der beiden Hohlräume und seiner gebogen verlaufenden Kontur zuverlässig gegeben ist, da die Zwischenhülse nicht als bewegliches Bauteil ausgestaltet sein muss, sondern diesem zweiten Hohlraum fest anliegend verbleibt. Insbesondere wenn die Zwischenhülse der komplexen Geometrie angepasst ist, die sich entlang der gewölbten Dichtfläche dort ergibt, wo die beiden Hohlräume eine Durchdringungskante schaffen, und der gewölbten Dichtfläche entlang dieser Durchdringungskante folgt und dieser fluiddicht anliegt wird dieser Vorteil besonders deutlich:

Es ist konstruktiv und produktionstechnisch bei der Auslegung und Herstellung des Gehäuses nicht erforderlich, die Schaffung einer planen Dichtfläche entweder direkt vorzusehen oder durch spanabhebende Nachbearbeitung zu ermöglichen. Die Zwischenhülse kann vielmehr an die Gegebenheiten des Gehäuses angepasst werden und verdrehsicher montiert werden, so dass deren fluiddichte Anlage an einem Hohlraum zuverlässig beibehalten wird, während sie weiterhin eine problemlos abdichtbare, plane Dichtfläche für den beweglichen Ventilkörper bereitstellt.

Da nun eine plane Dichtfläche für den beweglichen Ventilkörper mittels der Zwischenhülse geschaffen ist, kann dieser Ventilkörper in an sich bekannter Weise mit einer besonders einfachen Geometrie ausgestaltet und mit einfachen Mitteln geführt sein, da mit einfachen Mitteln die fluiddichte Anlage des Ventilkörpers an der planen Dichtfläche der Zwischenhülse problemlos sichergestellt werden kann. Zur Unterscheidung von der gewölbten Dichtfläche wird die plane Dichtfläche nachfolgend auch als Dichtsitz bezeichnet.

Vorteilhaft kann das Gehäuse, welches den beweglichen Ventilkörper aufnimmt und die gewölbte Dichtfläche bildet, aus einem Kunststoff bestehen, der Füllstoffe oder Verstärkungsstoffe bzw. Füll- und Verstärkungsstoffe enthält. Somit ist ein stabiles, leichtes und preisgünstig herstellbares Gehäuse ermöglicht. Aufgrund der Verwendung der Zwischenhülse muss dieses nicht spanabhebend nachbearbeitet werden, um dennoch einen zuverlässig dichten Sitz des beweglichen Ventilkörpers in dessen Schließstellung zu gewährleisten.

Vorteilhaft kann einer der beiden Hohlräume innerhalb des Gehäuses als Bohrung ausgestaltet sein, welche in die Gehäusewandung mündet. Diese Mündungsöffnung ist mit einem Verschlusselement abgeschlossen, welches entweder als reines Verschlusselement, beispielsweise als Deckel, ausgestaltet sein kann oder welches als Funktionsbauteil ausgestaltet sein kann, beispielsweise entweder als Gehäusewandung eines benachbarten Bauteils, so dass der Hohlraum an der Mündung verschlossen wird oder dieses zusätzliche Verschlusselement kann seinerseits als Rohrleitung ausgestaltet sein, so dass die Rohrleitung aus dem Gehäuse herausgeführt und mittels des Verschlusselementes weitergeführt wird. Das Verschlusselement schließt in diesem Fall die Mündungsöffnung lediglich zirkumferent ab, um Leckagen zu vermeiden.

Bei einer derartigen Konstruktion der Ventilbaugruppe kann die Zwischenhülse vorteilhaft als Rohrabschnitt ausgestaltet sein, welcher sich mit einem ersten stirnseitigen Ende an der gewölbten Dichtfläche abstützt, eine problemlose Montage dieser Zwischenhülse kann durch die Mündungsöffnung erfolgen und eine Fixierung der Zwischenhülse durch das erwähnte Verschlusselement bewirkt werden, so dass die Zwischenhülse zuverlässig in ihrer Stellung fixiert ist, in welcher sie der gewölbten Dichtfläche abdichtend anliegt. Um eine Fluidströmung in den zweiten Hohlraum bzw. aus dem zweiten Hohlraum kommend zu ermöglichen, weist der die Zwischenhülse bildende Rohrabschnitt eine radiale Öffnung auf, welche eine Fluid-Verbindung zu dem anderen Hohlraum schafft.

Vorteilhaft können beide Hohlräume als Bohrungen ausgestaltet sein und in die Gehäusewandung münden. Auf diese Weise ist eine besonders einfache und preisgünstige Herstellung der Ventilbaugruppe ermöglicht, indem das Gehäuse spritzgusstechnisch bzw. gießtechnisch hergestellt werden kann und die beiden Hohlräume mittels Kernen geschaffen werden, die vor der Entfernung des fertig gestellten Gussteils gezogen werden und dementsprechend eine Öffnung in der Gehäusewandung hinterlassen, welche jeweils die Mündungsöffnung des jeweiligen Hohlraums bildet. Beide Mündungsöffnungen müssen daher anschließend mit Verschlusselementen abgeschlossen werden, wobei als Verschlusselemente die oben bereits erwähnten Verschlusselemente in Betracht kommen.

Vorteilhaft können bei einer derartigen Ausgestaltung beider Hohlräume beide erforderlichen Verschlusselemente gleich ausgestaltet sein, so dass im Sinne eines Gleichteilekonzeptes möglichst wenig unterschiedliche Bauteile zur Herstellung der Ventilbaugruppe erforderlich sind und somit eine besonders wirtschaftliche Herstellung der Ventilbaugruppe unterstützt wird.

Um eine zuverlässige Abdichtung der Zwischenhülse gegenüber der gewölbten Dichtfläche zu unterstützen, kann die Zwischenhülse vorteilhaft dort, wo sie der gewölbten Dichtfläche benachbart ist, eine Nut aufweisen. In dieser Nut ist ein Dichtungselement vorgesehen, welches der gewölbten Dichtungsfläche fluiddicht anliegt. Bei diesem Dichtungselement kann es sich vorteilhaft um einen Dichtungsring aus einem Elastomerwerkstoff handeln, so dass geringfügige Toleranzen durch die Verformbarkeit des Elastomerwerkstoffs ausgeglichen werden können und ein zuverlässig dichter Sitz der Zwischenhülse an der gewölbten Dichtfläche sichergestellt ist.

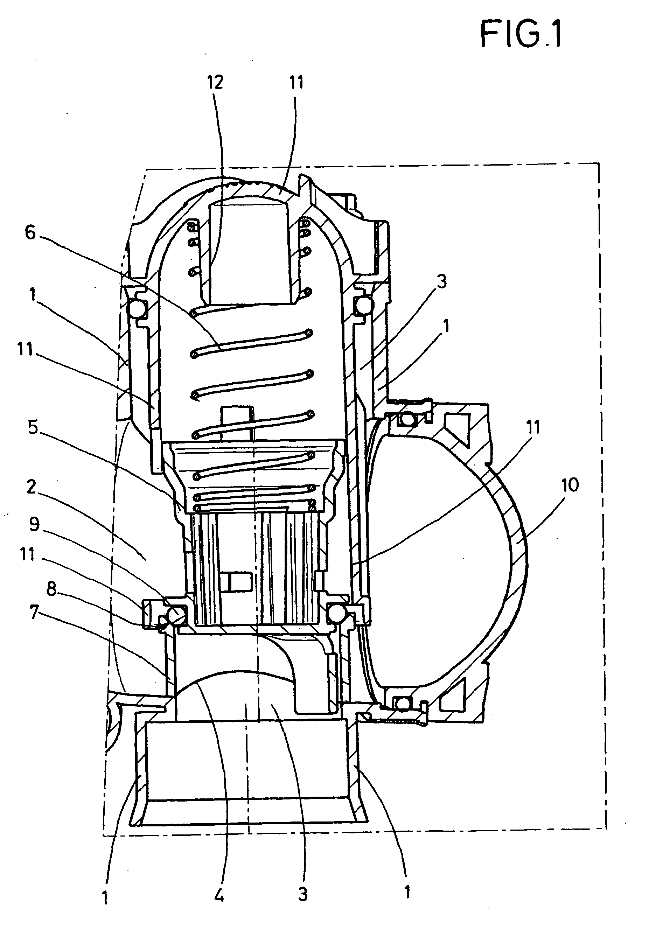

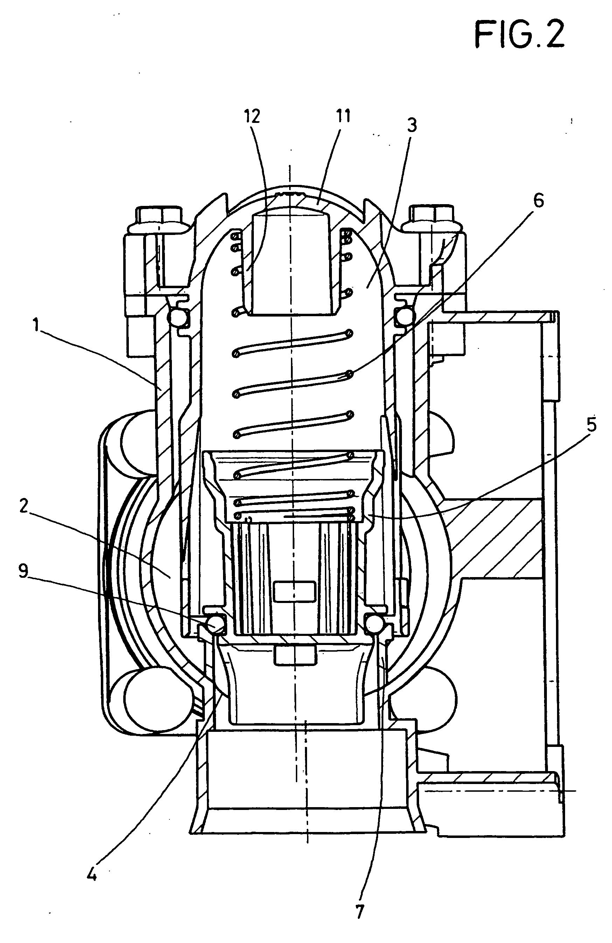

Ausführungsbeispiele der Erfindung werden anhand der rein schematischen Darstellungen nachfolgend näher erläutert. Dabei zeigen die
- Fig. 1 und 2,: jeweils paarweise ein Ausführungsbeispiel
- 3 und 4,: einer vorschlagsgemäßen Ventilbaugruppe
- 5 und 6: aus zwei um 90° zueinander versetzten An- sichten in Form von Schnitten durch das die Ventilbaugruppe aufweisende Gehäuse.

In den Zeichnungen ist jeweils mit 1 ein Gehäuse bezeichnet, innerhalb dessen sich zwei Hohlräume 2 und 3 durchdringen. Bei den dargestellten Ausführungsbeispielen handelt es sich bei den Hohlräumen 2 und 3 jeweils um längliche Kanäle, beispielsweise Bohrungen. Beide Hohlräume 2 und 3 sollen ein Fluid führen, beispielsweise Öl als Schmierstoff für eine Brennkraftmaschine, und die Verbindung zwischen den beiden Hohlräumen 2 und 3 soll mittels eines Rückschlagventils wahlweise gesperrt oder frei gegeben werden können.

Eine solche den Hohlraum 2 oder 3 bildende Bohrung muss nicht mittels eines Bohrers hergestellt werden, sondern beispielsweise durch einen länglichen Kern, der in eine Gießform bzw. Spritzgussform ragt und in axialer Richtung gezogen werden kann.

Dementsprechend müssen die Hohlräume 2 und 3 keinen Kreisquerschnitt aufweisen, wobei die dargestellten Ausführungsbeispiele jedoch rein beispielhaft zumindest annähernd kreisförmige Querschnitte der Hohlräume 2 und 3 zugunsten deren möglichst widerstandsarmer Durchströmbarkeit zeigen. Im Durchdringungsbereich dieser beiden sich kreuzenden Hohlräume 2 und 3 ergibt sich daher eine gewölbt verlaufende Durchdringungskante, entlang welcher die beiden Hohlräume 2 und 3 aneinander grenzen. Da die beiden Hohlräume 2 und 3 gegeneinander abgedichtet werden sollen, wird diese Durchdringungskante als Dichtfläche 4 bezeichnet.

Zur Abdichtung ist ein beweglicher Ventilkörper 5 vorgesehen, der bei entsprechende Druckbelastung durch das Fluid gegen die Wirkung einer Druckfeder 6 bewegt werden kann, wobei er sich von der Dichtfläche 4 weiter entfernt, so dass er aus einer Schließstellung in eine Öffnungsstellung gerät, in welcher die beiden Hohlräume 2 und 3 von dem Fluid durchströmbar miteinander verbunden sind.

Der Ventilkörper 5 liegt der gewölbten Dichtfläche 4 nicht direkt an, sondern dichtet mittels einer Zwischenhülse 7 die beiden Hohlräume 2 und 3 gegeneinander ab. Die Zwischenhülse 7 weist einerseits ein in den Zeichnungen unten dargestelltes Ende auf, mit welchem sie der Dichtfläche 4 fluiddicht anliegt, und weist an dem gegenüber liegenden Ende einen planen Dichtsitz 8 auf, an welchem der Ventilkörper 5 mit einem Dichtungsring 9 fluiddicht anliegt. Unterschiedliche Winkelstellungen des Ventilkörpers 5 um seine Längsachse sind unschädlich, da sich der schräg verlaufende Dichtsitz 8 lediglich um die Längsachse des Ventilkörpers 5 bzw. des Hohlraums 3 im Kreis gebogen erstreckt, jedoch nicht räumlich, sondern nur in einer einzigen Ebene verläuft.

Die beiden Hohlräume 2 und 3 münden jeweils in die Wand des Gehäuses 1 und sind mit Hilfe von Verschlusselementen 10 und 11 verschlossen. Während das Verschlusselement 10 lediglich als Deckel ausgestaltet ist, ist das Verschlusselement 11 zu einem Rohrabschnitt weitergeführt, der als Führung für den Ventilkörper 5 dient und zudem einen Rohrstutzen 12 ausbildet, der als Führung für die Druckfeder 6 dient.

Bei dem Ausführungsbeispiel der Fig. 1 ist die Zwischenhülse 7 mit dem Gehäuse 1 verschweißt, so dass eine zuverlässig fluiddichte Anlage der Zwischenhülse 7 am Gehäuse 1 entlang der gewölbten Dichtfläche 4 sichergestellt ist.

Fig. 2 zeigt die Ventilbaugruppe von Fig. 1 in einem um 90° zur Schnittebene der Fig. 1 versetzten Schnittebene.

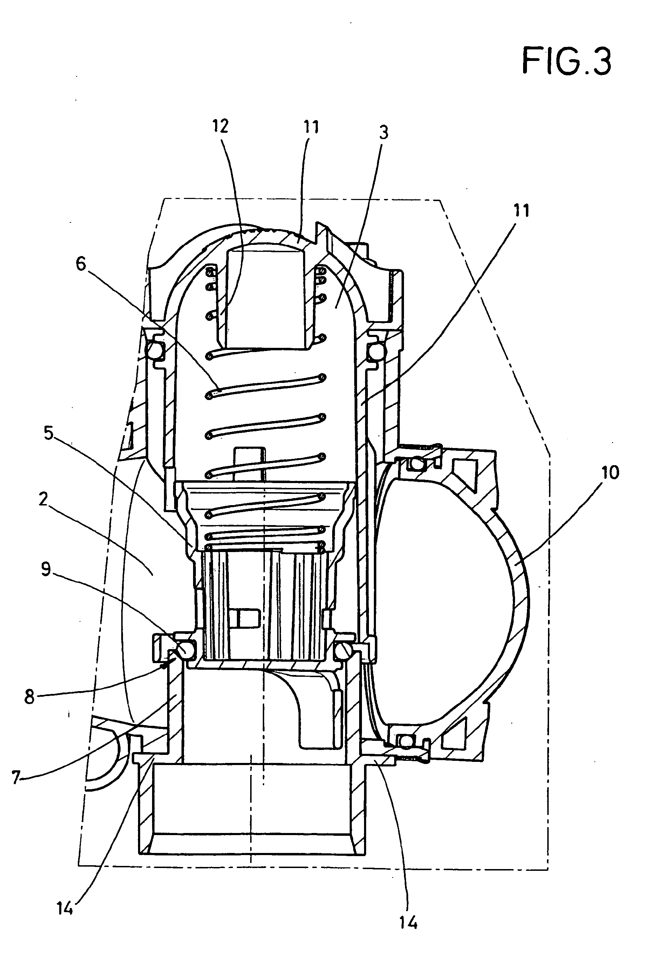

Fig. 3 zeigt ein zweites Ausführungsbeispiel, bei dem die Zwischenhülse 7 den Hohlraum 3 aus dem Gehäuse 1 nach außen verlängert auf der dem Verschlusselement 11 gegenüber liegenden Seite dieses Hohlraums 3. Die Zwischenhülse 7 weist daher zwei axial hintereinander angeordnete Abschnitte unterschiedlichen Durchmessers auf und im Übergangsbereich dieser beiden Abschnitte einen umlaufenden Flansch 14, der zur Festlegung der Zwischenhülse 7 am Gehäuse 1 dient, beispielsweise mittels Verklebung oder Verschweißung, wobei jedoch auch - unter Zwischenschaltung einer entsprechenden Dichtung - eine Verschraubung dieser beiden Bauteile möglich ist.

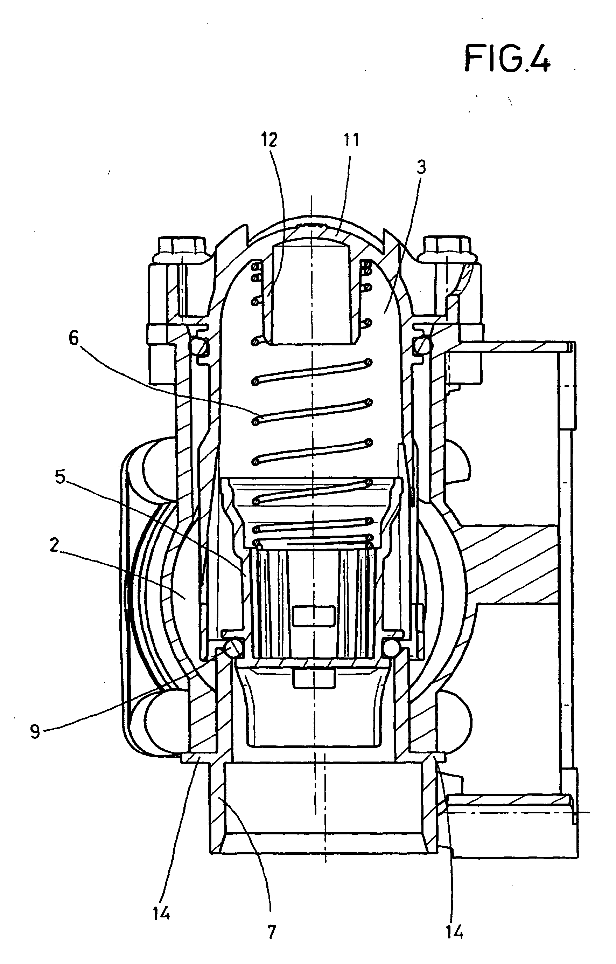

Fig. 4 stellt die um 90° gegenüber der Ansicht von Fig. 3 abgewinkelte Ansicht auf die Ventilbaugruppe dieses Ausführungsbeispiels dar.

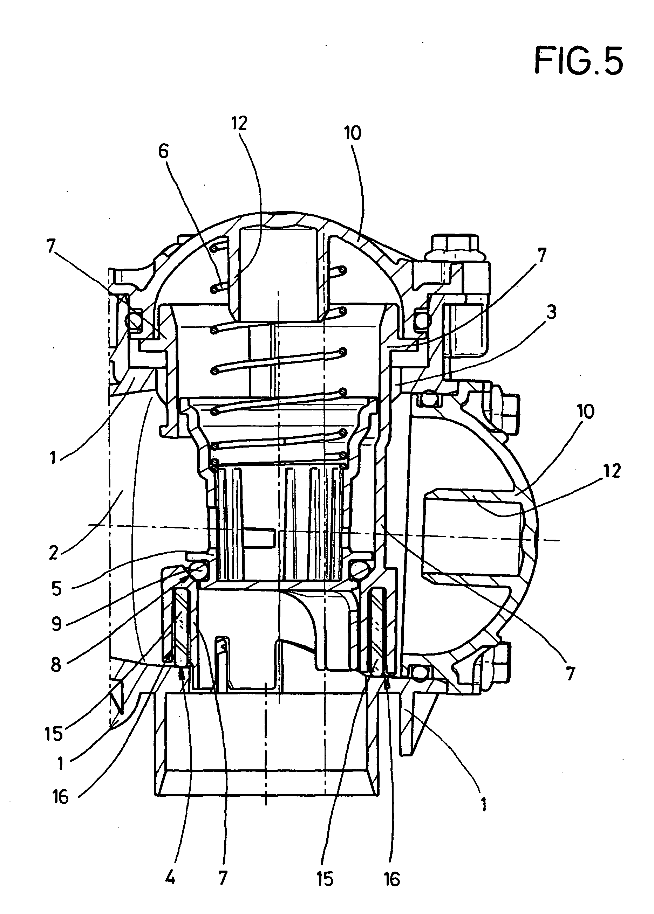

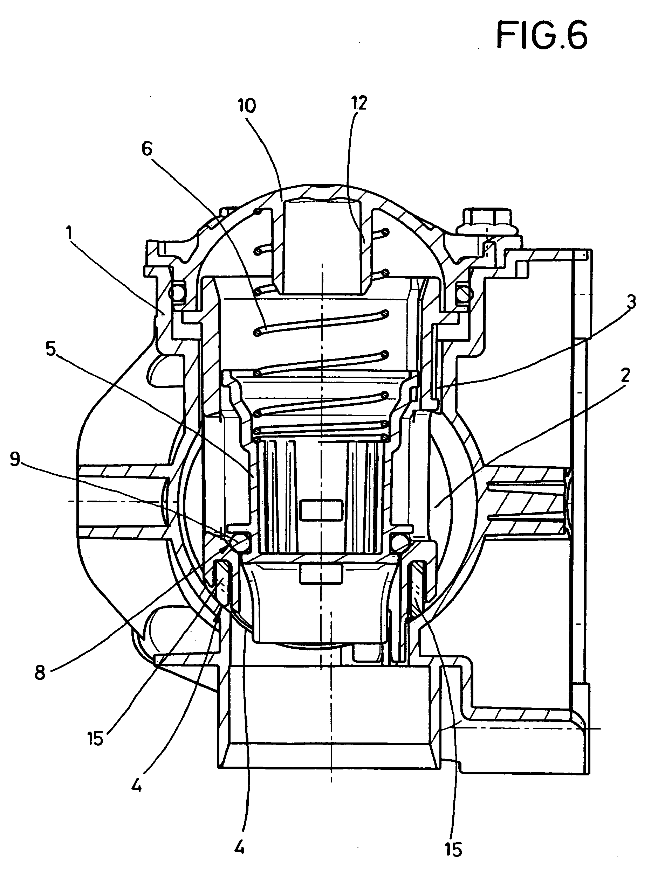

Die Fig. 5 und 6 zeigen ein drittes Ausführungsbeispiel, ebenfalls aus zwei unterschiedlichen Richtungen jeweils im Schnitt dargestellt, wobei für dieses Ausführungsbeispiel zwei gleiche Verschlusselemente 10 vorgesehen sind, die jeweils einen Rohrstutzen 12 aufweisen. Eine Führung für den beweglichen Ventilkörper 5 wird also nicht durch eine hülsenartige Verlängerung eines der beiden Verschlusselemente gebildet, sondern durch die Zwischenhülse 7, die entsprechend verlängert ist und sich innerhalb des Hohlraums 3 bis zu dem die Druckfeder 6 führenden Verschlusselement 10 erstreckt.

Die Abdichtung der Zwischenhülse 7 gegenüber der gewölbten Dichtfläche 4 erfolgt bei diesem Ausführungsbeispiel über einen Dichtungsring 15 aus einem Elastomerwerkstoff, der einen rechteckigen Querschnitt aufweist und in einer Nut 16 geführt ist. Sowohl die Tiefe der Nut 16 als auch die Querschnittsabmessungen des Dichtungsrings 15 verändern sich entlang dem Umfang der Zwischenhülse 7, wie aus den beiden vergleichenden Darstellungen der Fig. 5 und 6 hervorgeht, aufgrund des gewölbten Verlaufs der Dichtungsfläche 4.

## Patentansprüche

1. Ventilbaugruppe, mit einem Gehäuse (1),
zwei wahlweise gegeneinander abdichtbaren oder miteinander verbindbaren, im Gehäuse (1) vorgesehenen, zur Führung eines Fluids dienenden Hohlräumen (2, 3),
und einem Rückschlagventil, welches einen zwischen einer Schließstellung und einer Offenstellung beweglichen Ventilkörper (5) aufweist,
wobei der Ventilkörper (5) einer Dichtfläche fluiddicht anliegt, wenn er seine Schließstellung einnimmt und die beiden Hohlräume (2, 3) gegeneinander abdichtet,
und bei entsprechender Druckbelastung durch das Fluid gegen die Wirkung einer Druckfeder (6), derart, dass er sich dabei von der Dichtfläche (4) entfernt und aus seiner Schließstellung in eine Öffnungsstellung beweglich ist, in welcher die beiden Hohlräume (2, 3) von dem Fluid durchströmbar miteinander verbunden sind,
und wobei sich die beiden Hohlräume (2, 3) durchdringen, und eine Zwischenhülse (7) vorgesehen ist, welche einerseits einem der Hohlräume (2, 3) fluiddicht anliegt und andererseits eine plan verlaufende, als Dichtsitz (8) bezeichnete Dichtfläche schafft, an welcher der Ventilkörper (5) in seiner Schließstellung fluiddicht anliegt, **dadurch gekennzeichnet, dass** die beiden Hohlräume (2, 3) eine aufgrund der
Durchdringung gewölbt verlaufende Dichtfläche (4) schaffen,
und die Zwischenhülse (7) einerseits der gewölbten Dichtfläche (4) fluiddicht anliegt und andererseits die plan verlaufende, als Dichtsitz (8) bezeichnete Dichtfläche schafft.

2. Ventilbaugruppe nach Anspruch 1,
**dadurch gekennzeichnet,**
**dass** das Gehäuse (1) aus einem Füllstoffe und / oder Verstärkungsstoffe enthaltenden Kunststoff besteht.

3. Ventilbaugruppe nach Anspruch 1 oder 2,
**dadurch gekennzeichnet,**
**dass** einer der beiden Hohlräume (2, 3) als Bohrung ausgestaltet ist, die in die Gehäusewandung mündet,
die Mündungsöffnung mit einem Verschlusselement (10) abgeschlossen ist,
die Zwischenhülse (7) als Rohrabschnitt ausgestaltet ist, welcher sich mit einem ersten Ende an der gewölbten Dichtfläche (4) und mit einem zweiten Ende an dem Verschlusselement (10) abstützt,
wobei der Rohrabschnitt eine radiale Öffnung aufweist, die eine von dem Fluid durchströmbare Verbindung zu dem anderen Hohlraum (2) schafft.

4. Ventilbaugruppe nach einem der vorhergehenden Ansprüche,
**dadurch gekennzeichnet,**
**dass** die beiden Hohlräume (2, 3) als Bohrungen ausgestaltet sind, die in die Gehäusewandung münden,
wobei die Mündungsöffnungen mit Verschlusselementen (10, 11) abgeschlossen sind.

5. Ventilbaugruppe nach Anspruch 4,
**dadurch gekennzeichnet,**
**dass** beide Mündungsöffnungen mit gleichen Verschlusselementen (10) abgeschlossen sind.

6. Ventilbaugruppe nach einem der vorhergehenden Ansprüche,
**dadurch gekennzeichnet,**
**dass** die Zwischenhülse (7) dort, wo sie der gewölbten Dichtfläche (4) benachbart ist, eine Nut (16) aufweist, in welcher ein Dichtungselement angeordnet ist, welches der gewölbten Dichtfläche (4) fluiddicht anliegt.

7. Ventilbaugruppe nach Anspruch 6,
**dadurch gekennzeichnet,**
**dass** das Dichtungselement als Dichtungsring (15) aus einem Elastomerwerkstoff ausgestaltet ist.

8. Ventilbaugruppe nach einem der vorhergehenden Ansprüche,
**dadurch gekennzeichnet,**
**dass** die Zwischenhülse (7) als Rohrabschnitt ausgestaltet ist, welcher den in dem Rohrabschnitt angeordneten Ventilkörper (5) führt.

## Claims

1. Valve assembly with a housing (1),
two cavities (2, 3) for holding a fluid which are provided in the housing (1) and which can be sealed off from one another or connected with one another as required,
and a back-pressure valve which has a valve body (5) movable between a closed and an open position,
where the valve body (5) rests fluid-tightly against a sealing surface in the closed position, thereby sealing the two cavities (2, 3) off with reference to one another,
and can be moved into an open position by moving away from the sealing surface (4) out of its closed position when the fluid exerts sufficient pressure to counteract the effect of a pressure spring (6), in which open position the two cavities (2, 3) are connected with one another, thereby allowing the fluid to pass through them, and where the two cavities (2, 3) penetrate one another and an intermediate sleeve (7) is provided which, on the one hand, rests fluid-tight against one of the cavities (2, 3) and on the other, creates a flat sealing surface termed "sealing seat" (8), against which the valve body (5) rests fluid-tight when in its closed position,
**characterised in that**
the two cavities (2, 3) form a dome-shaped sealing surface (4) by virtue of the penetration,
and the intermediate sleeve (7), on the one hand, rests fluid-tight against the domed sealing surface (4) and on the other, creates the flat sealing surface termed "sealing seat" (8).

2. Valve assembly according to claim 1,
**characterised in that**
the housing (1) consists of a filling material and / or plastic containing reinforcing materials.

3. Valve assembly according to claim 1 or claim 2,
**characterised in that**
one of the two cavities (2, 3) is formed as a bore opening into the wall of the housing and the opening is closed with a closing element (10), and the intermediate sleeve (7) is formed as a tube section which is supported on the domed sealing surface (4) at one end and on the closing element (10) at the other end, where the tube section has a radial opening which creates a connection with the other cavity (2) through which the fluid can flow.

4. Valve assembly according to any of the preceding claims,
**characterised in that**
both the cavities are formed as bores which open onto the wall of the housing, where openings are closed with a closing elements (10, 11).

5. Valve assembly according to claim 4,
**characterised in that**
both openings are closed with the same closing elements (10).

6. Valve assembly according to any of the preceding claims,
**characterised in that**
the intermediate sleeve (7) has a groove (16) in the area adjacent to the domed sealing surface (4) in which a sealing element is located which rests fluid-tight against the domed sealing surface (4).

7. Valve assembly according to claim 6,
**characterised in that**
the sealing element is formed as a sealing ring (15) made of an elastomer material.

8. Valve assembly according to any of the preceding claims,
**characterised in that**
the intermediate sleeve (7) is formed as a tube section which guides the valve body (5) located in the tube section.

## Revendications

1. Module à vanne, comprenant un carter (1),
deux cavités (2, 3) en option étanchéifiables l'une par rapport à l'autre ou reliables entre elles, prévues dans le carter (1) et servant à guider un fluide,
et une vanne à clapet antiretour présentant un corps de vanne (5) mobile entre une position fermée et une position ouverte,
sachant que le corps de vanne (5) applique de façon étanche au fluide contre une surface d'étanchéité lorsque ledit corps arrive sur sa position fermée et qu'il étanchéifie les deux cavités (2, 3) l'une par rapport à l'autre,
et que sous une contrainte de pression correspondante exercée par le fluide pour vaincre l'effet d'un ressort de compression (6), ledit corps s'éloigne de la surface d'étanchéité (4) et peut quitter sa position fermée pour gagner une position ouverte dans laquelle les deux cavités (2, 3) sont reliées entre elles pour que le fluide puisse les traverser,
et sachant que les deux cavités (2, 3) s'interpénètrent et qu'une douille intermédiaire (7) a été prévue qui d'une part applique de manière étanche au fluide contre l'une des cavités (2, 3) et qui d'autre part crée une surface d'étanchéité désignée siège étanchéifiant (8) au tracé plan, surface contre laquelle le corps de vanne (5) applique de façon étanche au fluide lorsqu'en position fermée,
**caractérisé en ce que**
les deux cavités (2, 3) créent, en raison de l'interpénétration, une surface d'étanchéité (4) au tracé incurvé
et **en ce que** la douille intermédiaire (7) d'une part applique de façon étanche au fluide contre la surface d'étanchéité (4) incurvée, et d'autre part crée la surface d'étanchéité au tracé plan désignée siège étanchéifiant (8).

2. Module à vanne selon la revendication 1,
**caractérisé en ce que**
le carter (1) se compose d'une matière plastique contenant des matières de charge et/ou matières de renforcement.

3. Module à vanne selon la revendication 1 ou 2,
**caractérisé en ce que**
l'une des deux cavités (2, 3) est configurée en alésage aboutissant dans la paroi du carter,
l'orifice d'aboutissement est fermé par un élément obturateur (10), la douille intermédiaire (7) est configurée comme segment tubulaire dont une première extrémité prend appui contre la surface d'étanchéité (4) incurvée et dont la seconde extrémité prend appui contre l'élément obturateur (10),
sachant que le segment tubulaire présente un orifice radial créant une liaison - par laquelle le fluide peut circuler - avec l'autre cavité (2).

4. Module à vanne selon l'une des revendications précédentes,
**caractérisé en ce que**
les deux cavités (2, 3) sont configurées en alésages aboutissant dans la paroi du carter,
sachant que les orifices d'aboutissement sont fermés par des éléments obturateurs (10, 11).

5. Module à vanne selon la revendication 4,
**caractérisé en ce que**
les deux orifices d'aboutissement sont fermés par les mêmes éléments obturateurs (10).

6. Module à vanne selon l'une des revendications précédentes,
**caractérisé en ce que**
la douille intermédiaire (7) présente, là où elle voisine la surface d'étanchéité incurvée (4), une gorge (16) dans laquelle est agencé un élément joint qui applique de façon étanche au fluide contre la surface d'étanchéité (4) incurvée.

7. Module à vanne selon la revendication 6,
**caractérisé en ce que**
l'élément joint se présente sous forme de joint annulaire (15) réalisé dans un matériau élastomère.

8. Module à vanne selon l'une des revendications précédentes
**caractérisé en ce que**
la douille intermédiaire (7) est réalisée sous forme de segment tubulaire guidant le carter de vanne (5) agencé dans le segment tubulaire.
